# EUROPÄISCHE PATENTSCHRIFT

(11) **EP 0 984 498 B1**
(45) Veröffentlichungstag und Bekanntmachung des Hinweises auf die Patenterteilung: **27.11.2002**
(21) Anmeldenummer: 99114216.7
(22) Anmeldetag: 26.07.1999
(51) Int. Cl.: H01M 2/10, B60K 1/04

(54) **Formstabiler Behälter für eine Kraftfahrzeugbatterie**
Dimensionally stable housing for a vehicle-battery
Récipient de dimension stable pour une batterie d'automobile

(30) Priorität: 03.09.1998 DE 19840129
(43) Veröffentlichungstag der Anmeldung: 08.03.2000
(73) Patentinhaber: Volkswagen Aktiengesellschaft, 38436 Wolfsburg (DE)
(72) Erfinder: Hinz-Pöcking, Gerhard, Dipl.-Ing., 38448 Wolfsburg (DE); Kirchner, Michael, Dipl.-Designer, 38446 Wolfsburg (DE)

(56) Entgegenhaltungen:
- WO-A-97/25749
- DE-U- 8 521 248
- FR-A- 2 703 658

## Beschreibung

Die Erfindung betrifft einen formstabilen Behälter für eine Kraftfahrzeugbatterie, der vorzugsweise in einer thermisch belasteten Umgebung; insbesondere im Motorraum eines Kraftfahrzeuges, angeordnet ist.

Aus der EP 0 238 383 B1 ist ein Wärmedämmkasten für eine Kraftfahrzeugbatterie bekannt, der aus einem einzigen Stück geformt ist, eine Bodenwandung und vier Seitenwandungen aufweist und der zwischen der eingebetteten Batterie und seinen Wandungen wärmeisolierende Lufträume aufweist. Zur Ausbildung der Lufträume sind am Wärmedämmkasten Stützelemente zur dichtenden Anlage an der Batterie angeformt. In der EP 0 598 220 B1 und der DE 87 04 462.5 U1 sind flexible thermisch isolierende Batterieabdeckungen für Kraftfahrzeugbatterien beschrieben. Die im letzteren Dokument beschriebene eine Wärmeisolierhülle ist als offener Zuschnitt aus an beliebiger Stelle faltbarem wärmeisolierenden Hüllmaterial mit sich auf den Seitenwänden der Batterie überlappenden Zuschnitteilen ausgebildet, wobei an den Überlappungsstellen der Zuschnitteile in Überlappungsrichtung erstreckte Flächenverschlußelemente, beispielsweise Klettverschlüsse, vorgesehen sind.

Des weiteren ist es bekannt, eine Kraftfahrzeugbatterie und eine auf dieser direkt aufgesetzte und mit dem Pluspol verbundene Sicherungsbox mit einer flexiblen thermisch isolierenden Hülle aus geschäumten Polyester gemeinsam zu ummanteln, wobei die Seitenteile dieser Hülle so hoch sind, daß die Sicherungsbox mit umschlossen wird. Die Anordnung einer Sicherungsbox, deren darin aufgenommene Sicherungen mit einem Ende über ein oder mehrere Kabel mit einem Pol, meist dem Pluspol der Kraftfahrzeugbatterie, verbunden sind, direkt auf der Kraftfahrzeugbatterie hat den Vorteil, daß im Falle eines Fahrzeugcrashs Kurzschlüsse und durch diese verursachte Gefahren weitestgehend vermieden werden können, da durch diese Anordnung die Zahl freier, zerstörbarer ungesicherter Kabelstränge im Motorraum verringert ist.

Es ist Aufgabe der Erfindung, einen formstabilen Behälter für eine Kraftfahrzeugbatterie (Batterie) nach dem Oberbegriff des Anspruchs 1 zu schaffen, der eine solche und eine Sicherungsbox zugleich mechanisch schützt und die die Batterie thermisch gegen die Umgebungswärme, insbesondere die Motorwärme isoliert.

Diese Aufgabe wird bei einem formstabilen Behälter nach dem Oberbegriff des Anspruchs 1 durch dessen kennzeichnende Merkmale gelöst.

Die Erfindung besteht darin, daß ein formstabiler Behälter, der Stützelemente zur Anlage an der Batterie aufweist und zwischen dieser und den Behälterwandungen Lufträume ausbildet, mehrteilig ausgeführt ist und im Abstand zur Batterie eine Deckwandung und in dem gebildeten Hohlraum eine Zwischenwandung zur Halterung einer Sicherungsbox aufweist. Des weiteren sind in dem Behälter Durchführungen für die Batteriekabel und die von der Sicherungsbox wegführenden Kabel ausgebildet.

Damit ist ein formstabiler Behälter für eine Batterie gegeben, der fest an diesem anliegt und eine Sicherungsbox mit einschließt. Dieser Behälter schützt die Batterie und die Sicherungsbox bei einem Fahrzeugcrash vor direkten mechanischen Beaufschlagungen und kann durch seine Gestaltung selbst Crashenergie aufnehmen. Er schützt auch die Batterie vor thermischer Belastung, insbesondere durch die Motorwärme, so daß die Gefahr einer Beeinträchtigung des Elektrolyten in der Batterie weitestgehend beseitigt ist. Dieser wird oberhalb einer Temperatur von 60° instabil.

Dabei ist der Behälter vorzugsweise aus lösbar miteinander verbundenen Teilen gebildet, die an der Batterie montiert werden. Eines dieser Teile bildet wenigstens eine Seitenwandung und die Deckwandung und ein weiteres Teil die übrigen Seitenwandungen und ist zugleich Halterung für die Zwischenwandung. Damit ist der Behälter aus einer minimalen Teilezahl gebildet und kann auf einfache Weise auf eine im Motorraum positionierte Batterie bei gleichzeitiger Montage der Sicherungsbox montiert werden.

Zur Verstärkung der Wärmeisolation können die dem Motor zugekehrten Seitenwandungen innenseitig mit einer thermisch isolierenden Schicht versehen sein, beispielsweise aus geschäumtem Polyester.

Die Seitenwandungen weisen vorzugsweise vertikal ausgerichtete Vorsprünge zur Anlage an der Batterie auf, die rückseitig zugleich als Arretierungselemente für das andere Teil oder auch als Durchführung für Kabel nutzbar sind. Dadurch wird die Montage des Behälters zusätzlich erleichtert. Die am zweiten Teil angeordnete Zwischenwandung stützt sich mit vertikal zur Batterie gerichteten Stegen auf deren Oberseite ab, so daß die auf der Zwischenwandung befestigte Sicherungsbox definiert positioniert und sicher angeordnet ist.

Vorteilhaft ist es, wenn in der Deckwandung des Behälters eine Aussparung angeordnet ist, in die der Deckel der Sicherungsbox hineinragt. Damit ist diese von außen zugänglich, was im Falle eines Sicherungswechsels von erheblichem Vorteil ist. Damit bildet der Deckel der Sicherungsbox gleichsam einen Teil der Deckwandung des Behälters.

Es ist zweckmäßig, den Behälter an der Batterieauflage zu befestigen, um eine Fixierung des Behälters in vertikaler Richtung zu erlangen. Diese Batterieauflage kann eine spezielle Batteriekonsole sein, die, wie der Behälter, Lufträume zur Batterie ausbildet.

Die Teile des Behälters können untereinander durch Rastverbindungen lösbar verbindbar gestaltet sein, ebenso die Teile und die Batteriekonsole. Sie können mit den Rastelementen einstückig durch Spritzgießen, insbesondere aus Polypropylen geformt sein.

Die Erfindung wird nachstehend anhand eines Ausführungsbeispiels erläutert. Die zugehörige Zeichnung zeigt einen erfindungsgemäßen formstabilen Behälter für eine Kraftfahrzeugbatterie in einer Explosionsdarstellung.

Dieser Behälter weist ein erstes Teil 1 auf, das eine Seitenwandung 1 und zwei angrenzende Seitenwandbereiche 2a und 3a der angrenzenden Seitenwandungen und die Deckwandung 4 bildet. In dieser (4) ist eine Aussparung 5 angeordnet. In den Seitenwandbereichen 2a und 3a sind nach innen weisende vertikal angeordnete keilförmige Vorsprünge 6 mit jeweils einer Rastausnehmung 7 vorgesehen. Ein Teil der Seitenwandung 1 und des Seitenwandbereiches 3a ist mit einer thermisch isolierenden Schicht S aus aufgeschäumten Polyester ausgekleidet.

Der Behälter weist ein zweites Teil II auf, das eine der Seitenwandung 1 gegenüberliegende Seitenwandung 8 und zwei die Seitenwandbereiche 2a und 3a ergänzende Seitenwandbereiche 2b und 3b aufweist und mit diesen die schmalen Seitenwandungen des Behälters bilden. Die Seitenwandbereiche 2b und 3b weisen innenseitig Vorsprünge 9 auf, die außenseitig als keilförmige Einsenkungen 10 zur Aufnahme der Vorsprünge 6 ausgebildet sind. In diesen Einsenkungen sind betätigbare Rastdruckknöpfe 11 angeordnet, die mit den Rastausnehmungen 7 korrespondieren. Die Seitenwandung 8 weist in ihrer Mitte einen innenseitig ausgebildeten Vorsprung 12 auf, der außenseitig eine Einsenkung 13 bildet. Neben den Vorsprüngen 9 bzw. Einsenkungen 10 ist jeweils eine Rastaufnahme 14 angeordnet. Weitere Rastelemente 15 sind an der unteren Kante und Rastaufnahmen 16 neben dem Vorsprung 12 deckwandungsseitig angeformt.

Das Teil II ist zugleich Träger für eine Zwischenwandung 17. Diese weist vertikal ausgerichtete Stege 18 zum Abstützen auf der Kraftfahrzeugbatterie B und außenseitig Rastelemente 19 für die Rastaufnahmen 14 an den Seitenwandbereichen 2b und 3b, und Rastelemente 20 für die Rastaufnahmen 16 zur Anordnung am Teil II auf. In die Zwischenwandung 17 sind des weiteren bajonettverschlußartige Rastaussparungen 21 für an einer Sicherungsbox SB ausgebildete Rastfüße 22 eingebracht. Schließlich ist eine Abdeckung 23 für das Abdecken der Einsenkung 13 vorgesehen, die mit dieser eine Kabeldurchführung bildet. Weitere Kabeldurchführungen sind durch Absenkungen der Seitenwandbereiche 2b und 3b auf der den Rastaufnahmen abgewandten Seite der Vorsprünge 9 gegeben, die mit dem Teil I einen Schlitz bilden.

Die Teile I und II sind an einer Batteriekonsole III anordbar, derart, daß das Teil II mit seinen Rastelementen 15 mit dem Rand 24 derselben verbindbar und das Teil I an dem Teil II anordbar ist. Die Batteriekonsole III weist Hohlräume H auf, die mit der Batterie isolierende Lufträume bilden.

Die Batteriekonsole III ist ortsfest im Fahrzeug angeordnet. Nachdem die Batterie B auf diese aufgesetzt ist, kann das Teil II auf die Batteriekonsole III aufgesetzt und mit dieser verrastet werden. Anschließend werden die Batteriekabel angeschlossen, die Zwischenabdeckung 17 auf das Teil II aufgesetzt und mit diesem verrastet, die Sicherungsbox SB auf der Zwischenwandung 17 fixiert und mit dem Pluspol der Batterie B verbunden, von der Sicherungsbox SB abgehende Kabel in die rückwärtige Durchführung verlegt, diese mit der Abdeckung 23 versehen und schließlich das Teil I aufgesetzt und über die Rastelemente 7 und 11 aneinander fixiert, so daß der Behälter der Batterie B komplettiert ist, wobei die Sicherungsbox SB integriert wird, derart, daß deren Deckelteil in die Aussparung 5 ragt und von außen zugänglich ist. Der Behälter liegt mit den Vorsprüngen 6 und 12 sowie mit der thermisch isolierenden Schicht S und mit den Stegen 18 direkt an der Kraftfahrzeugbatterie B an und bildet mit dieser in den den Vorsprüngen 6 und 12 und den Stegen 18 benachbarten Bereichen thermisch isolierende Lufträume aus.

### BEZUGSZEICHENLISTE

- I: Teil
- II: Teil
- III: Batteriekonsole
- 1: Seitenwandung
- 2a: Seitenwandbereich
- 2b: Seitenwandbereich
- 3a: Seitenwandbereich
- 3b: Seitenwandbereich
- 4: Deckwandung
- 5: Aussparung
- 6: Vorsprung
- 7: Rastausnehmung
- 8: Seitenwandung
- 9: Vorsprung
- 10: Einsenkung
- 11: Rastdruckknopf
- 12: Vorsprung
- 13: Einsenkung
- 14: Rastaufnahme
- 15: Rastelement
- 16: Rastaufnahme
- 17: Zwischenwandung
- 18: Steg
- 19: Rastelement
- 20: Rastelement
- 21: Rastaussparung
- 22: Rastfluß
- 23: Abdeckung
- 24: Rand
- B: Batterie
- H: Hohlraum
- S: Schicht
- SB: Sicherheitsbox

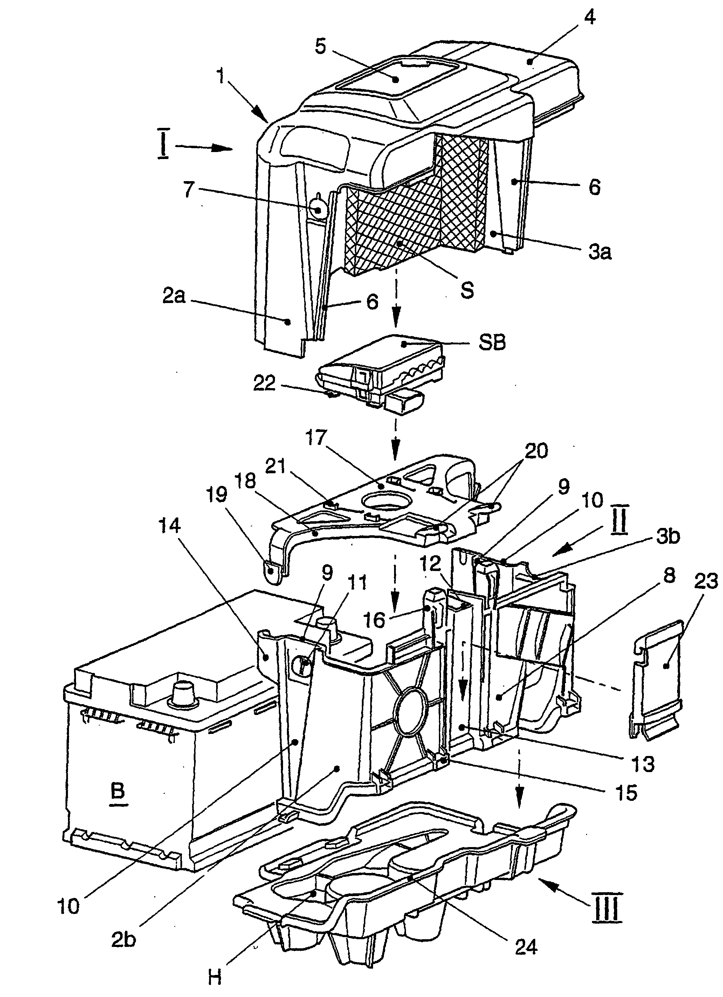

## Patentansprüche

1. Formstabiler Behälter für eine Kraftfahrzeugbatterie, der Stützelemente zur Anlage an der Kraftfahrzeugbatterie aufweist und zwischen dieser und den Behälterwandungen Lufträume durch behälterseitig fixierte Stützelemente ausbildet, die mit Wandungen der Kraftfahrzeugbatterie bündig abschließen, **dadurch gekennzeichnet, daß** der Behälter mehrteilig ist und eine Deckwandung (4) sowie eine zwischen dieser und der Batterie (B) ausgebildete Zwischenwandung (17) zur Halterung einer Sicherungsbox (SB) aufweist, und daß in dem Behälter Durchführungen für Kabel angeordnet sind.

2. Behälter nach Anspruch 1, **dadurch gekennzeichnet, daß** der Behälter aus lösbar miteinander verbundenen Teilen (I; II) gebildet ist, von denen ein erstes (I) wenigstens eine Seitenwandung (1) und die Deckwandung (4) und ein zweites (II) die übrigen Seitenwandungen (2a - 2b; 3a - 3b; 8) ausbildet und das zweite Teil (II) Träger für die Zwischenwandung (17) ist.

3. Behälter nach Anspruch 2, **dadurch gekennzeichnet, daß** die dem Verbrennungsmotor zugekehrten Seitenwandungen (1; 3a) innenseitig mit einer thermisch isolierenden Schicht (S) ausgekleidet sind.

4. Behälter nach Anspruch 2, **dadurch gekennzeichnet, daß** die Seitenwandungen (2b; 3b; 2a; 3a; 8) vertikal ausgerichtete Vorsprünge und die Zwischenwandung (17) vertikal zur Batterie (B) ausgerichtete Stege (18) als Stützelemente aufweisen.

5. Behälter nach Anspruch 2, **dadurch gekennzeichnet, daß** die Sicherungsbox (SB) in eine Aussparung (5) in der Deckwandung (4) hineinragend angeordnet ist.

6. Behälter nach Anspruch 2, **dadurch gekennzeichnet, daß** die Teile (I; II) auf einer Batteriekonsole (III) anordbar sind.

7. Behälter nach Anspruch 6, **dadurch gekennzeichnet, daß** die Batteriekonsole (III) Lufträume zur Batterie (B) ausbildet.

8. Behälter nach einem der Ansprüche 2 bis 7, **dadurch gekennzeichnet, daß** die Teile (I; II) und die Zwischenwandung (17) durch Rastverbindungen (7-11; 14-19; 16-20) aneinander befestigbar sind.

9. Behälter nach Anspruch 1, **dadurch gekennzeichnet, daß** die Sicherungsbox (SB) durch Rastverbindungen (21-22) auf der Zwischenwandung (17) befestigbar ist

10. Behälter nach einem oder mehreren der vorhergehenden Ansprüche, **dadurch gekennzeichnet, daß** die Teile (I; II) und die Batteriekonsole (III) Spritzgußteile aus Polypropylen sind.

## Claims

1. Dimensionally stable container for a motor vehicle battery, which has supporting elements for positioning against the motor vehicle battery and between the latter and the container walls forms, by means of supporting elements fixed on the container side, air chambers which end flush with walls of the motor vehicle battery, **characterized in that** the container has a number of parts and has a cover wall (4) and an intermediate wall (17), which is formed between the said cover wall and the battery (B), for the securing of a fuse box (SB), and **in that** leadthroughs for cables are arranged in the container.

2. Container according to Claim 1, **characterized in that** the container is formed from parts (I; II) which are releasably connected to each other and a first (I) of which forms at least a side wall (1) and the cover wall (4) and a second (II) of which forms the remaining side walls (2a-2b; 3a-3b; 8) and the second part (II) is a support for the intermediate wall (17).

3. Container according to Claim 2, **characterized in that** the side walls (1; 3a) facing the internal combustion engine are lined on the inside with a thermally insulating layer (S).

4. Container according to Claim 2, **characterized in that** the side walls (2b; 3b; 2a; 3a; 8) have vertically orientated projections and the intermediate wall (17) has webs (18) orientated perpendicularly with respect to the battery (B), as supporting elements.

5. Container according to Claim 2, **characterized in that** the fuse box (SB) is arranged protruding into a cutout (5) in the cover wall (4).

6. Container according to Claim 2, **characterized in that** the parts (I; II) can be arranged on a battery console (III).

7. Container according to Claim 6, **characterized in that** the battery console (III) forms air chambers towards the battery (B).

8. Container according to one of Claims 2 to 7, **characterized in that** the parts (I; II) and the intermediate wall (17) can be fastened to each other by latching connections (7-11; 14-19; 16-20).

9. Container according to Claim 1, **characterized in that** the fuse box (SB) can be fastened on the intermediate wall (17) by latching connections (21-22).

10. Container according to one or more of the preceding claims, **characterized in that** the parts (I; II) and the battery console (III) are injection-moulded parts made of polypropylene.

## Revendications

1. Récipient de forme stable pour une batterie de véhicule automobile, qui présente des éléments d'appui pour une disposition contre la batterie de véhicule automobile et forme entre celle-ci et les parois de récipient des espaces d'air par des éléments d'appui fixés du côté du récipient, qui ferment en affleurant des parois de la batterie de véhicule automobile, **caractérisé en ce que** le récipient comporte plusieurs parties et présente une paroi de recouvrement (4) et une paroi intermédiaire (17) formée entre celle-ci et la batterie (B) pour supporter une boîte à fusibles (SB), et **en ce que** dans le récipient des passages pour câbles sont aménagés.

2. Récipient selon la revendication 1, **caractérisé en ce que** le récipient est formé de parties (I, II) raccordées l'une à l'autre de façon amovible dont une première (I) forme au moins une paroi latérale (1) et la paroi de recouvrement (4) et une seconde (II) forme les parois latérales restantes (2a-2b ; 3a-3b ; 8), la deuxième partie (II) supportant la paroi intermédiaire (17).

3. Récipient selon la revendication 2, **caractérisé en ce que** les parois latérales (1 ; 3a) tournées vers le moteur à combustion interne sont revêtues à l'intérieur d'une couche (S) isolant thermiquement.

4. Récipient selon la revendication 2, **caractérisé en ce que** les parois latérales (2b ; 3b ; 2a ; 3a ; 8) présentent des saillies orientées verticalement et la paroi intermédiaire (17) présente des âmes (18) orientées verticalement vers la batterie (B) comme éléments d'appui.

5. Récipient selon la revendication 2, **caractérisé en ce que** la boîte à fusibles (SB) est disposée dans un évidement (5) dans la paroi de recouvrement (4) de façon à dépasser de celle-ci.

6. Récipient selon la revendication 2, **caractérisé en ce que** les parties (I ; II) peuvent être disposées sur une console (III) de batterie.

7. Récipient selon la revendication 6, **caractérisé en ce que** la console (III) de batterie forme des espaces d'air par rapport à la batterie (B).

8. Récipient selon l'une quelconque des revendications 2 à 7, **caractérisé en ce que** les parties (I ; II) et la paroi intermédiaire (17) peuvent être fixées les unes aux autres par des raccordements par encliquetage (7-11 ; 14-19 ; 16-20).

9. Récipient selon la revendication 1, **caractérisé en ce que** la boîte à fusibles (SB) peut être fixée par des raccordements par encliquetage (21-22) sur la paroi intermédiaire (17).

10. Récipient selon l'une ou plusieurs des revendications précédentes, **caractérisé en ce que** les parties (I ; II) et la console (III) de batterie sont des pièces moulées par injection en polypropylène.
